(19) **Europäisches Patentamt**

**European Patent Office**

**Office européen des brevets**

(11) Veröffentlichungsnummer : **0 384 103 B1**

(12) # EUROPÄISCHE PATENTSCHRIFT

(45) Veröffentlichungstag der Patentschrift :
**02.01.92 Patentblatt 92/01**

(21) Anmeldenummer : **90100200.6**

(22) Anmeldetag : **05.01.90**

(51) Int. Cl.⁵ : **F16B 13/14**

(30) Priorität : **18.02.89 DE 8901935 U**

(43) Veröffentlichungstag der Anmeldung :
**29.08.90 Patentblatt 90/35**

(45) Bekanntmachung des Hinweises auf die
Patenterteilung :
**02.01.92 Patentblatt 92/01**

(84) Benannte Vertragsstaaten :
**AT BE CH DE DK ES FR GB IT LI NL**

(56) Entgegenhaltungen :
**AT-B- 342 842**
**CH-A- 614 500**
**DE-A- 3 538 995**

(73) Patentinhaber : **fischerwerke Artur Fischer**
**GmbH & Co. KG**
**Weinhalde 14 - 18**
**W-7244 Waldachtal 3/Tumlingen (DE)**

(72) Erfinder : **Haug, Willi**
**Märzenbergstrasse 37**
**W-7290 Freudenstadt (DE)**

(74) Vertreter : **Ott, Elmar, Dipl.-Ing. et al**
**fischerwerke Artur Fischer GmbH & Co KG**
**Weinhalde 14-18**
**W-7244 Waldachtal 3/Tumlingen (DE)**

(54) **Injektionsadapter mit einem Befestigungselement.**

Jouve, 18, rue Saint-Denis, 75001 PARIS

**Beschreibung**

Die Erfindung betrifft einen Injektionsadapter mit einem Befestigungselement gemäß der Gattung des Hauptanspruchs.

Es sind Befestigungselemente bekannt, die als metallische Spreizanker ausgebildet sind und in Bohrlöchern mit Hinterschneidung formschlüssig eingesetzt werden können. Mit diesen Befestigungselementen können äußerst sichere Befestigungen in Beton oder dergleichen hergestellt werden, wobei sehr hohe Auszugskräfte erreicht werden. Für spezielle Anwendungen kann es erforderlich sein, daß die metallischen Befestigungselemente mit einem Korrosionsschutz versehen werden, wozu eine fließfähige Dichtungsmasse verwendet werden kann.

Aus der DE-A 3538995 ist ein Korrosionsschutz für ein derartiges Befestigungselement bekannt. Die Dichtungsmasse wird dort zunächst in das Bohrloch eingebracht, dann wird der metallische Spreizdübel in das Bohrloch eingesetzt, wobei die Dichtungsmasse verdrängt wird, so daß diese in Richtung Bohrlochmündung aufsteigt. Die Menge des Korrosionsschutzmittels muß dabei so ausreichend bemessen sein, daß dieses auch bis zur Bohrlochmündung aufsteigen kann. Selbst wenn eine ausreichende Menge Korrosionsschutzmittel vorgesehen wird, die bis zur Bohrlochmündung aufsteigt, kann dennoch mit dieser bekannten Methode nicht sichergestellt werden, daß sämtliche Hohlräume mit Korrosionsschutzmittel ausgefüllt werden.

Der Erfindung liegt die Aufgabe zugrunde, einen Injektionsadapter mit einem Befestigungselement zu schaffen, der das Einbringen eines Korrosionsschutzmittels in und um ein Befestigungselement, welches in ein Bohrloch eines Mauerwerks eingesetzt ist, gewährleistet.

Die Lösung dieser Aufgabe wird durch die im Hauptanspruch angegebenen Merkmale erhalten. Der Injektionsadapter übergreift den Gewindebolzen des Befestigungselements und schließt gegenüber der Stirnseite der Hülse des Befestigungselements dicht ab. Zu diesem Zweck besitzt der aus Kunststoff bestehende Injektionsadapter ein sich konisch verjüngendes Ende, dessen ringförmige Stirnfläche an der Stirnseite der Hülse anliegt. Vor dem Einspritzen des Korrosionsschutzmittels wird der Injektionsadapter auf den herausragenden Teil des Gewindebolzens aufgeschraubt, so daß dieser beim Injektionsvorgang nicht zurückweichen kann. Der beim Injektionsvorgang im Innenraum des Injektionsadapters auftretende Druck, der über 200 bar liegen kann, bewirkt, daß das sich konisch verjüngende Ende mit entsprechend hohem Druck gegen die angrenzende Stirnfläche der Hülse des Befestigungselements preßt. Dadurch wird sichergestellt, daß auch bei derart hohen Drücken, kein Korrosionsschutzmittel am Übergang zwischen Injektionsadapter und Hülse austreten kann. Das Korrosionsschutzmittel wird auf diese Weise mit hohem Druck in sämtliche Hohlräume des Befestigungselements und des Bohrlochs gepreßt.

Vorzugsweise ist am Innengewinde des Injektionsadapters wenigstens eine Längsnut ausgebildet, die wie ein Überströmkanal für das Korrosionsschutzmittel wirkt.

Um einen hohen Anpreßdruck beim Injektionsvorgang im Bereich der Stirnfläche der Hülse zu erhalten, ist der Innenraum des Injektionsadapters im Bereich des sich konisch verjüngenden Endes nach innen entsprechend konisch erweitert. Die Wandung des Injektionsadapters ist somit an seiner stirnseitigen Ringfläche am dünnsten, wodurch an dieser Stelle auch eine ausreichend hohe Elastizität erreicht wird, damit sich diese Ringfläche optimal an die Stirnseite der Hülse des Befestigungselements anpressen läßt.

Der Schmiernippel ist vorzugsweise koaxial am Injektionsadapter angeordnet und wird von einem becherförmigen Teil umgeben. Das becherförmige Teil schützt den Schmiernippel beim Ablegen des Injektionsadapters vor Beschädigungen und Verunreinigungen.

Das Befestigungselement ist vorzugsweise ein metallischer Spreizdübel, dessen Gewindebolzen einen Spreizkonus hat, der in die als Spreizhülse ausgebildete Hülse eingreift.

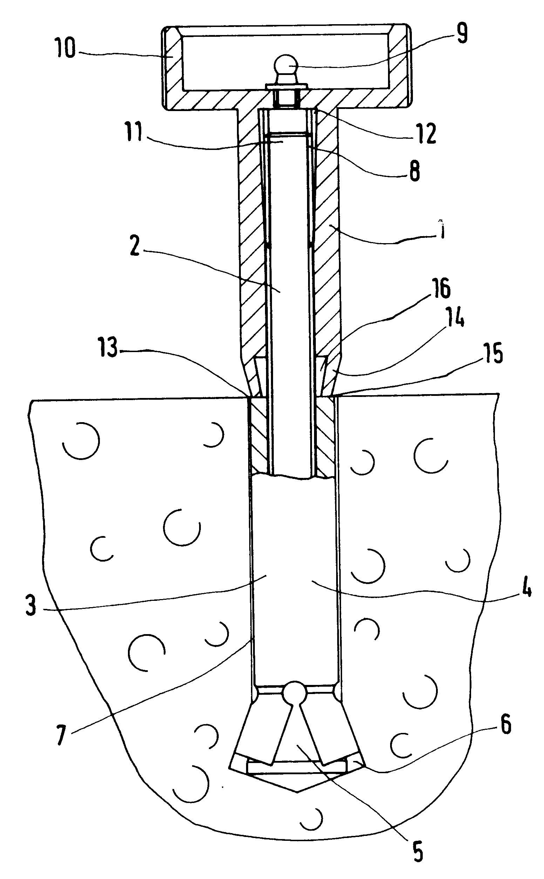

Die Erfindung wird nachfolgend anhand der Zeichnung, die einen Injektionsadapter mit einem in einem Bohrloch eines Mauerwerks verankerten metallischen Spreizdübel zeigt, näher erläutert.

Der Injektionsadapter 1 ist auf den Gewindebolzen 2 eines Befestigungselements 3 aufgeschraubt. Das Befestigungselement 3 ist ein metallischer Spreizdübel, der aus dem Gewindebolzen 2 und einer als Spreizhülse ausgebildeten Hülse 4 besteht. Am unteren Ende des Gewindebolzens 2 ist ein Spreizkonus 5 ausgebildet, der die Hülse 4 aufspreizt, so daß diese im unteren Bereich formschlüssig in eine Hinterschneidung 6 des Bohrlochs 7 eingreift.

Der Injektionsadapter 1 ist ein Kunststoffteil mit einem Innengewinde 8, einem Schmiernippel 9 und einem becherförmigen Teil 10. Über den Schmiernippel 9 kann Korrösionsschutzmittel mittels einer hier nicht dargestellten Presse in den Innenraum 11 gepreßt werden. Über eine Längsnut 12 kann das Korrosionsschutzmittel unter hohem Druck am Gewindebolzen 2 entlang in die Hülse 4 gepreßt werden, bis das Korrosionsschutzmittel im Bereich des Spreizkonus 5 austritt und außen im Bohrloch 7 bis zur Bohrlochöffnung 13 aufsteigt. Wesentlich ist dabei, daß das sich verjüngende Ende 14 mit seiner stirnseitigen Ringfläche 15 dicht an der Stirnseite der Hülse 4 anliegt. Damit dies gewährleistet ist, ist der Injektionsadapter 1 in diesem Bereich konisch vejüngt und besitzt außerdem in diesem Bereich einen konish erweiterten Innenraum 16.

## Patentansprüche

1. Injektionsadapter mit einem in ein Bohrloch eines Mauerwerks einsetzbaren Befestigungselement zum Einbringen einer fließfähigen Masse in Hohlräume des Befestigungselements und des Bohrlochs, wobei das Befestigungselement einen in einer Hülse angeordneten Gewindebolzen hat, **dadurch gekennzeichnet**, daß der Injektionsadapter (1) ein rohrförmiges KunststoMeil mit einem Innengewinde (8) ist und auf den Teil des Gewindebolzens (2), der nach außen an der Hülse (4) hervorsteht, aufgeschraubt ist, daß das sich konisch verjüngende Ende (14) mit seiner stirnseitigen Ringfläche (15) an der angrenzenden Stirnseite der Hülse (4) dicht anliegt, und daß in der Wandung des Injektionsadapters (1) ein Schmiernippel (9) eingesetzt ist.

2. Injektionsadapter nach Anspruch 1, **dadurch gekennzeichnet**, daß der Injektionsadapter (1) im Innengewinde (8) wenigstens eine Längsnut (12) hat.

3. Injektionsadapter nach einem der vorhergehenden Ansprüche, **dadurch gekennzeichnet, daß** der Schmiernippel (9) für einen Druck von mehr als 200 bar ausgelegt ist.

4. Injektionsadapter nach einem der vorhergehenden Ansprüche, **dadurch gekennzeichnet, daß** der Innenraum (16) im Bereich des sich konisch verjüngenden Endes (14) sich nach innen konisch erweitert.

5. Injektionsadapter nach einem der vorhergehenden Ansprüche, **dadurch gekennzeichnet, daß** der Schmiemippel (9) koaxial am Injektionsadapter (1) angeordnet ist und in einem becherförmigen, erweiterten Teil (10) einliegt.

6. Injektionsadapter nach einem der vorhergehenden Ansprüche, **dadurch gekennzeichnet, daß** das Befestigungselement ein metallischer Spreizdübel ist, dessen Gewindebolzen (2) einen Spreizkonus (5) hat, der in einen aufspreizbaren Teil der als Spreizhülse ausgebildeten Hülse (4) eingreift.

## Claims

1. Injection adapter, with a fixing element arranged to be inserted in a hole drilled in masonry, for introducing a compound capable of flowing into cavities in the fixing element and the drilled hole, the fixing element having a threaded bolt arranged in a sleeve, characterized in that the injection adapter (1) is a tubular plastics part with an internal thread (8) and is screwed onto the part of the threaded bolt (2) that projects outwards at the sleeve (4), the tapering end (14) lies with its front end annular face (15) closely against the adjoining end face of the sleeve (4), and a lubrication nipple (9) is fitted in the wall of the injection adapter (1).

2. An injection adapter according to claim 1, characterized in that the injection adapter (1) has at least one longitudinal groove (12) in the internal thread (8).

3. An injection adapter according to one of the preceding claims, characterized in that the lubrication nipple (9) is suited for a pressure of more than 200 bars.

4. An injection adapter according to one of the preceding claims, characterized in that the internal space (16) in the region of the tapering end (14) widens in an inward direction.

5. An injection adapter according to one of the preceding claims, characterized in that the lubrication nipple (9) is arranged coaxially on the injection adapter (1) and lies in a cup-shaped widened part (10).

6. An injection adapter according to one of the preceding claims, characterized in that the fixing element is an expansible metal fixing plug, the threaded bolt (2) of which has an expander cone (5) that engages an expansible part of the sleeve (4) constructed as an expansible sleeve.

## Revendications

1. Adaptateur à injection comportant un élément de fixation susceptible d'être mis en place dans un trou foré dans un ouvrage de maçonnerie, et destiné à faire entrer un produit pâteux, susceptible de fluer dans les espaces creux de l'élément de fixation et du trou foré, l'élément de fixation comportant un boulon fileté disposé dans une douille, caractérisé par le fait que l'adaptateur (1) à injection est une pièce tubulaire en matière plastique comportant un filetage intérieur (8) et qui est vissée sur la partie du boulon fileté (2) qui fait saillie vers l'extérieur sur la douille (4) ; en ce que l'extrémité (14) qui se rétrécit coniquement s'appuie de façon étanche par sa surface annulaire frontale (15) sur le côté frontal voisin de la douille (4), et en ce qu'un raccord fileté (9) de graissage est mis en place dans la paroi de l'adaptateur (1) à injection.

2. Adaptateur à injection selon la revendication 1, caractérisé en ce que l'adaptateur (1) à injection comporte au moins une gorge longitudinale (12) dans le filetage intérieur (8).

3. Adaptateur à injection selon l'une des revendications précédentes, caractérisé en ce que le raccord fileté (9) de graissage est conçu pour une pression supérieure à 200 bars.

4. Adaptateur à injection selon l'une des revendications précédentes, caractérisé en ce que l'espace intérieur (16) s'élargit coniquement vers l'intérieur dans la zone de l'extrémité (14) qui se rétrécit coniquement.

5. Adaptateur à injection selon l'une des revendications précédentes, caractérisé en ce que le raccord fileté (9) de graissage est disposé coaxialement à l'adaptateur (1) à injection et est placé dans une partie (10) élargie, en forme de coupe.

6. Adaptateur à injection selon l'une des revendications précédentes, caractérisé en ce que l'élément de fixation est une douille métallique expansible dont le boulon fileté (2) comporte un cône (5) d'expansion qui pénètre dans une partie expansible de la douille (4) conformée en douille d'expansion.